# EUROPEAN PATENT APPLICATION

(11) **EP 4 349 908 A1**
(43) Date of publication of application: **10.04.2024**
(21) Application number: 22816352.3
(22) Date of filing: 19.05.2022
(51) Int. Cl.: C08L 23/08, C08L 77/00, C08L 23/06, C08L 23/16, C08L 101/00, C08J 3/12, F16C 1/16

(54) **COMPOSITION AND LINER FOR HIGH-PRESSURE GAS STORAGE TANK COMPRISING SAME**

(30) Priority: 01.06.2021 KR 20210070906
(71) Applicant: Hanwha Solutions Corporation, Jung-gu Seoul 04541 (KR)
(72) Inventor: SONG, Hansoo, Daejeon 34128 (KR); KANG, Chulee, Seoul 04194 (KR); KANG, Won Jun, Daejeon 34128 (KR); LEE, Jaehyeok, Daejeon 34128 (KR); BAE, Seong Soo, Daejeon 34128 (KR)
(74) Representative: Berggren Oy
(86) International application number: PCT/KR2022/007155
(87) International publication number: WO 2022/255693

(57) **Abstract**

Provided are a composition having excellent gas barrier property and low-temperature impact resistance, and a liner for high-pressure gas storage tanks comprising the same. Particularly, provided are a composition, in which resin particles reinforcing low-temperature impact resistance are dispersed in a gas barrier resin, thereby having excellent gas barrier property and excellent impact resistance while being easily moldable, and a liner for high-pressure gas storage tanks.

## Description

### [TECHNICAL FIELD]

### CROSS-REFERENCE TO RELATED APPLICATION(S)

This application claims the benefit of Korean Patent Application No. 1 0-2021-0070906, filed on June 1, 2021, the disclosure of which is herein incorporated by reference herein in its entirety.

The present disclosure relates to a composition and a liner for high-pressure gas storage tanks comprising the same. Specifically, the present disclosure relates to a composition with excellent gas barrier property and low-temperature impact resistance and a liner for high-pressure gas storage tanks.

### [BACKGROUND ART]

Metal materials have been traditionally used in high-pressure gas storage tanks, particularly, liners for storage tanks. However, since the liners for storage tanks, made of metal materials, are heavy, it is not easy to transport, and thus there is a problem of requiring high cost of transportation. Accordingly, for weight lightening, resins have been recently used as a liner composition.

The resins used for weight lightening in liners include polyamide, polyethylene, and the like. However, there are problems in that polyethylene-based liners have inferior gas barrier property than polyamide-based liners, and polyamide-based liners have inferior impact resistance or chemical resistance, although their gas barrier property is superior to that of polyethylene-based liners.

Polyethylene and polyamide resins are commonly inferior in impact resistance, as compared to that demanded in the market, and in order to make up for this, a configuration of laminating a thermoplastic resin has been proposed. However, since liners for high-pressure gas containers with the laminated structure require a complicated molding process, called multi-layer blow molding, there is a problem of high manufacturing cost. In addition, the multi-layer blow molding is difficult because of a complex shape or a small dimension of the high-pressure gas tank.

Accordingly, it is necessary to develop a liner resin for high-pressure gas storage tanks, which is easy to process and has excellent gas barrier property and low-temperature impact resistance, and thus is suitable for high-pressure gas storage.

### [DETAILED DESCRIPTION OF THE INVENTION]

### [Technical Problem]

Accordingly, there are provided a composition having excellent gas barrier property and low-temperature impact resistance, and a liner for high-pressure gas storage tanks comprising the same. Specifically, there are provided a composition in which resin particles to complement low-temperature impact resistance are dispersed in a gas barrier resin, and a liner for high-pressure gas storage tanks comprising the same.

### [Technical Solution]

Accordingly, there is provided a composition in which an impact resistance reinforcing resin (B) and a compatibilizer (C) are dispersed in the form of particles in a gas barrier resin (A).

The gas barrier resin (A) may be one or more selected from the group consisting of a polyamide, a polyvinyl alcohol (PVOH), and an ethylene vinyl alcohol copolymer (EVOH).

Specifically, the gas barrier resin (A) may be an ethylene vinyl alcohol (EVOH) copolymer having an ethylene content of 35 mol% or more.

The impact resistance reinforcing resin (B) may be one or more selected from the group consisting of high-density polyethylene (HDPE), low-density polyethylene (LDPE), ultra low-density polyethylene (LLDPE), metallocene polyethylene, polypropylene, very low-density polyethylene (VLDPE), polyolefin elastomer (POE), olefin block copolymer (OBC), ethylene acetate copolymer (EVA), ethylene butyl acrylate (EBA), ethylene propylene diene rubber (EPDM), ether block amide copolymer (PEBA), thermoplastic urethane (TPU), thermoplastic ester elastomer (TPEE), silicone rubber, natural rubber (NR), isoprene rubber (IR), butyl rubber (IIR), and butadiene rubber (BR).

Specifically, the impact resistance reinforcing resin (B) may be a polyolefin elastomer (POE) or a mixture of a polyolefin elastomer (POE) and a high-density polyethylene (HDPE) or low-density polyethylene (LDPE).

A mixing ratio in the mixture of the polyolefin elastomer (POE) and the high-density polyethylene (HDPE) or low-density polyethylene (LDPE) may be 100 parts by weight or more of the high-density polyethylene (HDPE) or low-density polyethylene (LDPE) with respect to 100 parts by weight of the polyolefin elastomer.

There is provided a liner for high-pressure gas storage tanks comprising the composition.

### [ADVANTAGEOUS EFFECTS]

According to the present invention, resin particles reinforcing low-temperature impact resistance, together with a compatibilizer, are dispersed in a gas barrier resin, thereby providing a composition, in which excellent gas barrier property and excellent impact resistance are compatible, and a liner for high-pressure gas storage tanks comprising the same.

Specifically, in the composition according to the present invention, the impact resistance reinforcing resin is dispersed as particles in the gas barrier resin, and therefore, the composition may have excellent gas barrier property and excellent impact resistance while being molded into a single layer when used in a liner for high-pressure gas storage tanks, and thus the composition has excellent moldability.

### [BRIEF DESCRIPTION OF DRAWINGS]

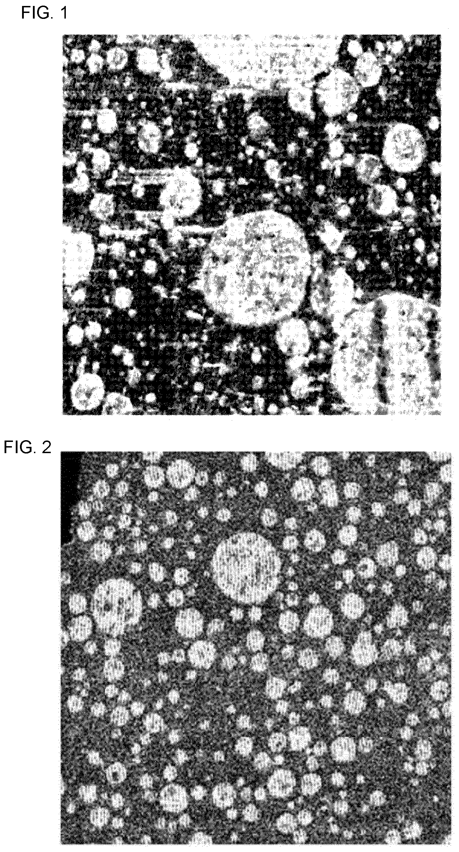

FIG. 1 shows an image of a composition of Example 2 of the present invention, as observed using an atomic force microscope (AFM), in which an impact resistance reinforcing resin (B), of which interface is surrounded by a compatibilizer (C), is dispersed in the form of particles in a gas barrier resin (A); and
FIG. 2 shows an image of a composition of Example 3 of the present invention, as observed using an atomic force microscope (AFM), in which an impact resistance reinforcing resin (B), of which interface is surrounded by a compatibilizer (C), is dispersed in the form of particles in a gas barrier resin (A).

### [DETAILED DESCRIPTION OF THE EMBODIMENTS]

In the present invention, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "comprise", "equipped", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Further, in the present invention, when a layer or an element is mentioned to be formed "on" or "above" layers or elements, it means that each layer or element is directly formed on the layers or elements, or other layers or elements may be additionally formed between the layers, subjects, or substrates.

While the present invention is susceptible to various modifications and alternative forms, specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a composition and a liner for high-pressure gas storage tanks comprising the same according to embodiments of the present invention will be described in detail.

According to one embodiment of the present invention, the composition of the present invention may include an impact resistance reinforcing resin (B) and a compatibilizer (C) which are dispersed in the form of particles in a gas barrier resin (A).

In this regard, as a mixing ratio of the gas barrier resin (A) and the impact resistance reinforcing resin (B), the content of the impact resistance reinforcing resin (B) may be 5% by weight to 50% by weight with respect to the total weight of the gas barrier resin (A) and the impact resistance reinforcing resin (B). Specifically, the content of the impact resistance reinforcing resin (B) may be 10% by weight to 40% by weight, or 20% by weight to 40% by weight, or 25% by weight to 35% by weight with respect to the total weight of the gas barrier resin (A) and the impact resistance reinforcing resin (B).

When the impact resistance reinforcing resin (B) is mixed in an excessively small amount, it is not expected that the low-temperature impact strength is improved, and on the contrary, when the impact resistance reinforcing resin (B) is mixed in a large amount, there may be a problem of inferior gas barrier property.

The gas barrier resin (A) may be one or more selected from the group consisting of polyamide, polyvinyl alcohol (PVOH), and an ethylene vinyl alcohol (EVOH) copolymer.

Specifically, the gas barrier resin (A) may be an ethylene vinyl alcohol copolymer. The ethylene vinyl alcohol copolymer is a copolymer consisting of an ethylene unit and a vinyl alcohol unit, in which the content of the ethylene unit may be more than 35 mol%. Specifically, the content of the ethylene unit in the ethylene vinyl alcohol copolymer may be 36 mol% or more, 40 mol% or more, 43 mol% or more, 50 mol% or less, or 45 mol% or less.

When the content of the ethylene unit is too low, there may be a problem of inferior molding processability, and when the content of the ethylene unit is too high, there may be a problem of inferior gas barrier property.

The ethylene vinyl alcohol (EVOH) copolymer included in the gas barrier resin (A) of the present invention may have a melt flow index of 0.1 g/10 minutes to 40 g/10 minutes, as measured according to ASTM D1238 under conditions of a temperature of 230°C and a load of 2.16 kg. Specifically, the melt flow index of the ethylene vinyl alcohol (EVOH) copolymer may be 1 g/10 min to 10 g/10 min, or 3 g/10 min to 7 g/10 min, or 5 g/10 min to 6 g/10 min.

In addition, a weight average molecular weight (Mw) of the ethylene vinyl alcohol (EVOH) copolymer may be 30,000 g/mol to 250,000 g/mol. Specifically, the weight average molecular weight of EVOH may be 100,000 g/mol to 150,000 g/mol.

In addition, the gas barrier resin (A) may be specifically polyamide. The polyamide may be one or more selected from the group consisting of nylon-4,6, nylon-6, nylon-6,6, nylon-6,10, nylon-7, nylon-8, nylon-9, nylon-11, nylon-12, nylon-46, MXD6, and amorphous polyamide. Alternatively, the polyamide may be a copolymer of two or more selected from the above group. Alternatively, the polyamide may be a mixture of two or more selected from the above group.

However, polyphenylene sulfide compounds are not suitable in terms of improving burst strength to withstand high charging pressure, and therefore, when used as the gas barrier resin for a liner for high-pressure gas storage tanks, it is not suitable because it is apprehended that the reinforcing layer may break inside thereof.

The impact resistance reinforcing resin (B) may be one or more selected from the group consisting of high-density polyethylene (HDPE), low-density polyethylene (LDPE), ultra low-density polyethylene (LLDPE), metallocene polyethylene, polypropylene, very low-density polyethylene (VLDPE), polyolefin elastomer (POE), olefin block copolymer (OBC), ethylene acetate copolymer (EVA), ethylene butyl acrylate (EBA), ethylene propylene diene rubber (EPDM), ether block amide copolymer (PEBA), thermoplastic urethane (TPU), thermoplastic ester elastomer (TPEE), silicone rubber, natural rubber (NR), isoprene rubber (IR), butyl rubber (IIR), and butadiene rubber (BR).

Specifically, the impact resistance reinforcing resin (B) may be a polyolefin elastomer (POE) or a mixture of a polyolefin elastomer (POE) and a high-density polyethylene (HDPE) or low-density polyethylene (LDPE). In other words, the impact resistance reinforcing resin (B) may be more specifically a polyolefin elastomer (POE) alone, a mixture of a polyolefin elastomer (POE) and a low-density polyethylene (LDPE), or a mixture of a polyolefin elastomer (POE) and a high-density polyethylene (HDPE), or a mixture of a polyolefin elastomer (POE) and a low-density polyethylene (LDPE) and a high-density polyethylene (HDPE).

When the impact resistance reinforcing resin (B) is a mixture of a polyolefin elastomer (POE) and a high-density polyethylene (HDPE) or low-density polyethylene (LDPE), as a mixing ratio thereof, the high-density polyethylene (HDPE) or the low-density polyethylene (LDPE) may be mixed in an amount of 100 parts by weight or more with respect to 100 parts by weight of the polyolefin elastomer. Specifically, the high-density polyethylene (HDPE) or the low-density polyethylene (LDPE) may be included in an amount of 100 parts by weight to 500 parts by weight with respect to 100 parts by weight of the polyolefin elastomer.

When the impact resistance reinforcing resin (B) is a mixture of a polyolefin elastomer (POE) and a low-density polyethylene (LDPE) or high-density polyethylene (HDPE), there may be a problem that low-temperature impact resistance is not improved when the low-density polyethylene or high-density polyethylene is mixed in excess of the above-described content range.

The polyolefin elastomer (POE) included in the impact resistance reinforcing resin (B) is a type of very low-density polyethylene (VLDPE) among polyethylenes, and is a copolymer of ethylene and alpha-olefin. Since the polyolefin elastomer has low density and high elasticity, it may be used as an impact modifier. In the process of producing polyethylene by copolymerizing ethylene and alpha-olefin, the density of polyethylene may be controlled by controlling the content of alpha-olefin.

According to one embodiment of the present invention, the polyolefin elastomer (POE) may be polypropylene, polyethylene, a copolymer of ethylene and propylene, a copolymer of ethylene and alpha-olefin, a terpolymer of ethylene, propylene and diene monomer, a copolymer of ethylene and polar vinyl monomer, a terpolymer of ethylene, maleic anhydride, and acrylate, an ionomer of ethylene and acrylic acid, an ionomer of ethylene and methacrylic acid, or a copolymer of a combination thereof.

Specifically, the polyolefin elastomer (POE) used in the present invention may have a density of 0.850 g/cc to 0.915 g/cc, Tm of 30°C to 110°C, and crystallinity of 10% to 40%. More specifically, the polyolefin elastomer (POE) of the present invention may have a density of 0.857 g/cc to 0.885 g/cc, Tm of 35°C to 80°C, and crystallinity of 10% to 20%. Further, the polyolefin elastomer (POE) may have a melt flow index of 0.1 g/10 minutes to 10.0 g/10 minutes or 0.9 g/10 minutes to 2.0 g/10 minutes, as measured according to ASTM D1238 under conditions of a temperature of 230°C and a load of 2.16 kg. Further, a weight average molecular weight of the polyolefin elastomer (POE) may be 50,000 g/mol to 800,000 g/mol. Specifically, the weight average molecular weight of POE may be 200,000 g/mol to 250,000 g/mol.

The low-density polyethylene (LDPE) included in the impact resistance reinforcing resin (B) is a polyethylene having a density of 0.910 g/cc to 0.925 g/cc, and its melt flow index may be 0.1 g/10 minutes to 150 g/10 minutes or 18.0 g/10 minutes to 22.0 g/10 minutes, as measured according to ASTM D1238 under conditions of a temperature of 230°C and a load of 2.16 kg. In addition, a weight average molecular weight of the low-density polyethylene (LDPE) that may be used in the present invention may be 30,000 g/mol to 500,000 g/mol. Specifically, the weight average molecular weight of LDPE may be 50,000 g/mol to 100,000 g/mol.

Further, the high-density polyethylene (HDPE) included in the impact resistance reinforcing resin (B) is a polyethylene having a density of 0.940 g/cc to 0.965 g/cc, and its melt flow index may be 0.1 g/10 minutes to 150 g/10 minutes or 15.0 g/10 minutes to 20.0 g/10 minutes, as measured according to ASTM D1238 under conditions of a temperature of 230°C and a load of 2.16 kg. In addition, a weight average molecular weight of the high-density polyethylene (HDPE) that may be used in the present invention may be 30,000 g/mol to 500,000 g/mol. Specifically, the weight average molecular weight of HDPE may be 50,000 g/mol to 100,000 g/mol.

Styrene-based elastomers such as styrene ethylene/butylene styrene (SEBS) are generally produced by a process of adding hydrogens to double bonds in the molecule of diene-based block copolymers. Therefore, since SEBS is produced by this process, use thereof as the impact resistance reinforcing resin may generate a problem that the production cost is increased, as compared to use of polyethylene elastomers.

The compatibilizer (C) may be placed by surrounding the interface of the impact resistance reinforcing resin (B) which is dispersed in the form of particles in the gas barrier resin (A) matrix.

The compatibilizer (C) may be one or more selected from the group consisting of an ethylene-anhydrous ethylene-acrylic acid copolymer, an ethylene-ethyl acrylate copolymer, an ethylene-alkyl acrylate-acrylic acid copolymer, a maleic anhydride modified (grafted) high-density polyethylene, a maleic anhydride modified (grafted) linear low-density polyethylene, an ethylene-alkyl methacrylate-methacrylic acid copolymer, an ethylene-butyl acrylate copolymer, an ethylene-vinyl acetate copolymer, and a maleic anhydride modified (grafted) ethylene-vinyl acetate copolymer.

Further, a weight ratio of the compatibilizer (C) may be 5 parts by weight to 50 parts by weight with respect to the total 100 parts weight of the gas barrier resin (A) and the impact resistance reinforcing resin (B). Specifically, the weight ratio of the compatibilizer (C) may be 5 parts by weight to 30 parts by weight, or 5 parts by weight to 10 parts by weight.

When the content of the compatibilizer is too high, there may be a problem of reducing the effect of the resin component. On the contrary, when the content of the compatibilizer is too low, there may be a problem that the impact resistance reinforcing resin (B) is not uniformly dispersed in the form of particles in the gas barrier resin (A) due to inferior resin blending.

The composition according to the present invention may have a low-temperature impact strength of 6 kJ/m² or more when stored for 4 hours at a temperature of -40°C according to ASTM D256. Specifically, the low-temperature impact strength may be 7 kJ/m² or more, 8 kJ/m² or more, 10 kJ/m² or more, 13 kJ/m² or more, 15 kJ/m² or more, 17 kJ/m² or more, or 16 kJ/m² or less, 11 kJ/m² or less, 9 kJ/m² or less.

In addition, the composition according to the present invention may have oxygen permeability of 0.5 cc/(m²·day) or less, or more than 0 cc/(m²·day) to 0.4 cc/(m²·day) or less, or more than 0 cc/(m²·day) to 0.1 cc/(m²·day) or less, as measured according to ASTM D3985 under conditions of a liner thickness of 1 mm, a temperature of 23.0°C, and relative humidity of 65%.

This is because, as the resin (B) reinforcing the low-temperature impact resistance is added to the gas barrier resin (A) according to the above-described composition, the composition of the present invention may maintain excellent gas barrier property, and at the same time, may have improved low-temperature impact resistance.

In addition, the liner for high-pressure gas storage tanks according to the present invention may include the above composition. Accordingly, the liner for high-pressure gas storage tanks according to the present invention has excellent gas barrier property and impact resistance.

A method of applying the liner for high-pressure gas storage tanks according to the present invention to high-pressure gas storage tanks may be implemented by a single-layer molding method widely known in the art.

Hereinafter, preferred exemplary embodiments will be provided for better understanding of the present invention. However, the following exemplary embodiments are provided only for illustrating the present invention, but the present invention is not limited thereby.

### Experimental Example: Preparation and test of liner composition for high-pressure gas storage tank

Liner compositions for high-pressure gas storage tanks were prepared as Experimental Example of the present invention according to compositions of Table 1 below, and oxygen permeability and low-temperature impact strength were tested, and the results are shown.

For the preparation of a melt blend resin, which is the composition of Table 1, a twin-screw extruder (27mmΦ) from Leistritz was used. The temperature of a sample input part of the twin-screw extruder, as a processing temperature, was 170°C, the average internal temperature of the extruder was 200°C, and the temperature of an extrusion orifice was 210°C. Preparation was performed under conditions of a screw speed of 200 rpm to 250 rpm, and a feeding speed of 8 kg/h to 9 kg/h.

In Table 1 below, EVOH is an ethylene vinyl alcohol copolymer, and EVOH having a melt flow index of 5.5 g/10 minutes was used, as measured according to ASTM D1238 at a temperature of 230°C and a load of 2.16 kg. In addition, EVOH having a weight average molecular weight of 134,790 g/mol was used.

As a polyolefin elastomer (POE), an ethylene-octene copolymer having a density of 0.870 g/cc, Tm of 60.0°C, and a melt flow index of 1.0 g/10 minutes according to ASTM D1238 was used. In addition, POE having a weight average molecular weight of 247,130 g/mol was used.

As an LDPE, LDPE having a density of 0.924 g/cc and a melt flow index of 20.0 g/10 minutes according to ASTM D1238 was used. In addition, LDPE having a weight average molecular weight of 92,740 g/mol was used.

As an HDPE, HDPE having a density of 0.958 g/cc and a melt flow index of 18.0 g/10 minutes according to ASTM D1238 was used. In addition, HDPE having a weight average molecular weight of 97,000 g/mol was used.

As a compatibilizer, a maleic anhydride grafted polyethylene (MAH grafted polyethylene) was used.

Test conditions of oxygen permeability and low-temperature impact strength are as follows.

The oxygen permeability was measured according to the measurement method ASTM D3985 under conditions of a liner thickness of 1 mm, a temperature of 23.0°C, and a relative humidity of 65%.

The low-temperature impact strength was measured according to the measurement method ASTM D256 after storage for 4 hours at -40°C.

**[Table 1]**

| Section | Liner composition | | | | | | Oxygen permeability | Low-temperat ure impact strength |
|---|---|---|---|---|---|---|---|---|
| | Gas barrier resin (A) | | | Impact resistance reinforcing resin (B) | | Compatibiliz er (C)* | | |
| | Kind of resin | Ethylene content (mol%) | % by weight with respect to (A)+(B) | Kind of resin | % by weight with respect to (A)+(B) | Parts by weight with respect to total 100 parts by weight of (A) + (B) | [cc/(m² · day)] | [kJ/m²] |
| Example 1 | EVOH | 44 | 74.5 | LDPE | 20.0 | 7 | 0.1 | 7.2 |
| | | | | POE | 5.5 | | | |
| Example 2 | EVOH | 44 | 72.3 | LDPE | 16.2 | 7 | 0.1 | 8.1 |
| | | | | POE | 11.5 | | | |
| Example 3 | EVOH | 44 | 75.8 | POE | 24.2 | 7 | 0.1 | 15.3 |
| Example 4 | EVOH | 44 | 62.6 | HDPE | 18.9 | 7 | 0.1 | 10.4 |
| | | | | POE | 18.5 | | | |
| Comparativ e Example 1 | EVOH | 44 | 100 | - | - | - | 0.04 | 3.9 |
| Comparativ e Example 2 | PA11 | - | 100 | - | - | - | 3.1 | 5.4 |
| Comparativ e Example 3 | HDPE | - | 100 | - | - | - | 45.6 | 9.8 |

## Claims

1. A composition comprising an impact resistance reinforcing resin (B) and a compatibilizer (C) which are dispersed in the form of particles in a gas barrier resin (A),
wherein the gas barrier resin (A) is one or more selected from the group consisting of polyamide, polyvinyl alcohol (PVOH), and ethylene vinyl alcohol copolymer (EVOH), and
the impact resistance reinforcing resin (B) is one or more selected from the group consisting of high-density polyethylene (HDPE), low-density polyethylene (LDPE), ultra low-density polyethylene (LLDPE), metallocene polyethylene, polypropylene, very low-density polyethylene (VLDPE), polyolefin elastomer (POE), olefin block copolymer (OBC), ethylene acetate copolymer (EVA), ethylene butyl acrylate (EBA), ethylene propylene diene rubber (EPDM), ether block amide copolymer (PEBA), thermoplastic urethane (TPU), thermoplastic ester elastomer (TPEE), silicone rubber, natural rubber (NR), isoprene rubber (IR), butyl rubber (IIR), and butadiene rubber (BR).

2. The composition of claim 1, wherein the content of the impact resistance reinforcing resin (B) is 5% by weight to 50% by weight with respect to the total weight of the gas barrier resin (A) and the impact resistance reinforcing resin (B).

3. The composition of claim 1, wherein a weight ratio of the compatibilizer (C) is 5 parts by weight to 50 parts by weight with respect to the total 100 parts weight of the gas barrier resin (A) and the impact resistance reinforcing resin (B).

4. The composition of claim 1, wherein the ethylene vinyl alcohol copolymer has an ethylene content of more than 35 mol%.

5. The composition of claim 1, wherein the polyamide is one or more selected from the group consisting of nylon-4,6, nylon-6, nylon-6,6, nylon-6,10, nylon-7, nylon-8, nylon-9, nylon-11, nylon-12, nylon-46, MXD6, and amorphous polyamide, or a copolymer of two or more thereof, or a mixture of two or more thereof.

6. The composition of claim 1, wherein the impact resistance reinforcing resin (B) is a polyolefin elastomer (POE) or a mixture of a polyolefin elastomer (POE) and a high-density polyethylene (HDPE) or a low-density polyethylene (LDPE).

7. The composition of claim 6, wherein a mixing ratio in the mixture of the polyolefin elastomer (POE) and the high-density polyethylene (HDPE) or low-density polyethylene (LDPE) is 100 parts by weight or more of the high-density polyethylene (HDPE) or low-density polyethylene (LDPE) with respect to 100 parts by weight of the polyolefin elastomer.

8. The composition of claim 1, wherein the compatibilizer (C) surrounds the interface of the impact resistance reinforcing resin (B) which is dispersed in the form of particles in the gas barrier resin (A).

9. The composition of claim 8, wherein the compatibilizer (C) is one or more selected from the group consisting of an ethylene-anhydrous ethylene-acrylic acid copolymer, an ethylene-ethyl acrylate copolymer, an ethylene-alkyl acrylate-acrylic acid copolymer, a maleic anhydride modified (grafted) high-density polyethylene, a maleic anhydride modified (grafted) linear low-density polyethylene, an ethylene-alkyl methacrylate-methacrylic acid copolymer, an ethylene-butyl acrylate copolymer, an ethylene-vinyl acetate copolymer, and a maleic anhydride modified (grafted) ethylene-vinyl acetate copolymer.

10. The composition of claim 1, wherein the liner for high-pressure gas storage tank has a low-temperature impact strength of 6 kJ/m² or more, as measured according to ASTM D256.

11. A liner for high-pressure gas storage tank, comprising the composition of any one of claims 1 to 10.
